# EUROPÄISCHE PATENTSCHRIFT

(11) **EP 0 842 629 B1**
(45) Veröffentlichungstag und Bekanntmachung des Hinweises auf die Patenterteilung: **05.09.2001**
(21) Anmeldenummer: 97117453.7
(22) Anmeldetag: 09.10.1997
(51) Int. Cl.: A47J 43/08

(54) **Antriebssystem für eine elektrisch angetriebene Küchenmaschine**
Drive unit for an electric food processor
Ensemble d'entraînement d'un robot ménager

(30) Priorität: 04.11.1996 DE 19645305
(43) Veröffentlichungstag der Anmeldung: 20.05.1998
(73) Patentinhaber: Braun GmbH, Kronberg (DE)
(72) Erfinder: Kamprath, Karl-Heinz, 65207 Wiesbaden (DE); Börger, Georg, 61449 Steinbach (DE); Pfeiffer, Bernd, 61118 Bad Vilbel (DE)

(56) Entgegenhaltungen:
- EP-A- 0 804 895
- CH-A- 139 131
- CH-A- 253 909
- DE-A- 3 933 036
- DE-A- 4 215 882
- PATENT ABSTRACTS OF JAPAN vol. 018, no. 058 (C-1159), 31.Januar 1994 & JP 05 277033 A (TSUINBAADE KOGYO KK), 26.Oktober 1993,

## Beschreibung

Die vorliegende Erfindung bezieht sich auf eine elektrisch angetriebene Haushaltsküchenmaschine.

Elektrisch angetriebene Haushaltsküchenmaschinen werden zunehmend mit zwei Arbeitseinheiten ausgestattet, um beispielsweise dem Benutzer Arbeitseinheiten mit unterschiedlichen Drehzahlen zur Verfügung zu stellen, so daß er, den Einsatzbedingungen entsprechend, mit der einen Antriebswelle oder mit der anderen Antriebswelle unter der jeweiligen Drehzahl arbeiten kann. Außerdem können solche unterschiedlichen Antriebswellen mit verschiedenen Verbindungselementen ausgestattet werden, so daß verschiedene Arbeitswerkzeuge, wie Rühr- und Knetwerkzeuge oder Messer, an der jeweiligen Antriebswelle befestigt werden können.

Üblicherweise werden die beiden Antriebswellen über einen einzelnen, in dem Gerät angeordneten, elektrischen Antriebsmotor angetrieben. Hierzu wird die Antriebswelle des Elektromotors über einen ersten Antriebsriemen mit einer Antriebsscheibe der einen Antriebswelle für die eine Arbeitseinheit verbunden, während die andere Antriebswelle der anderen Arbeitseinheit mit einem zweiten Antriebsriemen gekoppelt ist. Dieser Aufbau mit zwei Antriebsriemen ist erforderlich, damit unter ausreichender Spannung eine sichere Antriebsübertragung zwischen der Motor-Antriebswelle bzw. den auf dieser befestigten Riemenscheiben und den beiden Antriebswellen bzw. Antriebsscheiben der Arbeitseinheiten gewährleistet ist.

Eine elektrische Haushaltsküchenmaschine, die mit einem Antriebsmotor und einer Arbeitseinheit ausgestattet ist, ist zum Beispiel aus der DE-31 26 956 A1 bekannt. Bei diesem Gerät handelt es sich um.einen Schnetzler bzw um ein Zerkleinerungsgerät, das auch zum Rühren geeignet ist. Der Motor sowie die Antriebsspindel für ein Rühr- oder Zerkleinerungswerkzeug sind an einem gemeinsamen Träger gehalten. Die jeweiligen Antriebsspindeln stehen über die Unterseite des Trägers vor und tragen jeweils eine Riemenscheibe, über die ein Antriebsriemen geführt ist. Für das geeignete Untersetzungsverhältnis zwischen der Antriebswelle des Motors und der Antriebsspindel der Arbeitseinheit sind die beiden Antriebsscheiben unterschiedlich im Durchmesser dimensioniert.

In der EP-A-0 804 895 ist insbesondere in Fig. 3 eine perspektivische Ansicht von der Unterseite eines kompletten Trägers mit daran befestigtem Antriebsmotor, Antriebsritzel und Antriebsscheiben dargestellt, die über einen einzigen Antriebsriemen miteinander verbunden sind. Der komplette Träger dient für ein Arbeitssystem eines elektrisch angetriebenen Haushaltsgerätes der eingangs beschriebenen Art. In dem Antriebssystem ist der Antriebsriemen umlaufend über die Antriebsscheibe der Motor-Antriebswelle und die jeweiligen Antriebsscheiben der beiden Antriebswellen der Arbeitseinheiten geführt. In den Antriebsriemen greift ein Spannrad ein.

Weiterhin ist aus der CH-A-139 131 ein Küchenmaschinenaggregat, wie es in Großküchen für Krankenhäuser und dergleichen verwendet wird, bekannt. Hierbei sind auf einem Tisch mehrere Arbeitsmaschinen, wie Kaffeemühle, Fleischwolf, Passier-, Rühr-, Knet-, Reibe-, Schneide- und Schnitzelmaschine bekannt. Diese Arbeitsmaschinen sind auf einer Tischplatte befestigt und werden über einen Treibriemen von einem am Boden auf einer Abstellplatte befestigten Elektromotor angetrieben. Um den Treibriemen auf Spannung zu halten, ist zwischen den Riemenscheiben eine Spannrolle vorgesehen. Bei diesem Küchenmaschinenaggregat handelt es sich um eine Treibriemeneinrichtung, die mehrere einzelne voneinander getrennte Arbeitsmaschinen antreibt und deren Elektromtor weit entfernt von den Arbeitsmaschinen am Boden abgestellt ist, d.h. die verschiedenen Arbeitsmaschinen sind einzelne fremdangetriebene Küchengeräte.

Ausgehend von dem vorstehend angegebenen Stand der Technik liegt der vorliegenden Erfindung die Aufgabe zugrunde, ein Antriebssystem für eine elektrisch angetriebene Haushaltsküchenmaschine mit mindestens zwei Antriebswellen für jeweils eine Arbeitseinheit derart auszugestalten, daß sich zum einen ein einfacher Aufbau ergibt und daß zum anderen ein sicherer Eingriff zwischen der Motor-Antriebswelle, den beiden Antriebsscheiben der Antriebswellen und dem Antriebsriemen gewährleistet wird.

Diese Aufgabe wird durch die Merkmale des Patentanspruchs 1 gelöst.

Aufgrund der Umlenkeinrichtung, die in den Antriebsriemen eingreift, kann der Umschlingungswinkel bzw. der Umschlingungsurnfang des Antriebsriemens um die beiden der Umlenkeinrichtung benachbarten zwei Antriebsscheiben vergrößert werden. Durch den größeren Umschlingungswinkel kann eine erhöhte Kraft von dem Antriebsriemen auf die Antriebsscheibe übertragen werden, so daß die Reibungskraft dazwischen erhöht wird. Es wird somit ein sicherer Eingriff zwischen dem Riemen und der Riemenscheibe erzielt, so daß ein Schlupf nicht auftritt. Weiterhin ist es möglich, durch geeignete Anordnung der Umlenkeinrichtung den Umschlingungswinkel einzustellen, d.h. zu vergrößern oder zu verkleinern, oder den größeren Umschlingungswinkel zu der einen Antriebsscheibe hin zu verlagern. Weiterhin ist mit dem einen Antriebsriemen, mittels dem beide Arbeits-Antriebswellen angetrieben werden, ein kostengünstiger Aufbau gegeben, da ein zweiter Antreibsriemen für die zweite Antriebseinheit nicht benötigt wird.

Um zum einen den Antriebsriemen geeignet spannen zu können, zum anderen aber auch eine leichtere Montage des Antriebsriemens zu ermöglichen, ist die Umlenkeinrichtung in ihrer Position justierbar angeordnet. Je nach der Stellung der Umlenkeinrichtung wird der Umschlingungswinkel des Antriebsriemens um die Antriebsscheiben verändert. Darüberhinaus wird zur Montage des Antriebsriemens die Umlenkeinrichtung in einer Stellung positioniert, in der der Antriebsriemen über die jeweiligen Antriebsscheiben problemlos gelegt werden kann, wonach dann die Umlenkeinrichtung in Eingriff mit dem Antriebsriemen gebracht wird, um den Antriebsriemen geeignet zu spannen.

Es ist möglich, die Umlenkeinrichtung als feststehendes Gleitteil auszubilden, über das der Antriebsriemen gleitend geführt wird. Bevorzugt wird allerdings die Umlenkeinrichtung gemäß Anspruch 2 als eine Umlenkrolle ausgebildet, die in den Antriebsriemen eingreifend mitläuft.

Im Hinblick auf eine einfache Anbringung des Antriebsriemens sollte dieser vorzugsweise gemäß Anspruch 3 eine solche Länge aufweisen, daß er unter gelöster Umlenkeinrichtung von den Antriebsscheiben des Motors und der Antriebswellen für die Arbeitseinheiten leicht abnehmbar und leicht anbringbar ist.

Eine platzsparende Anordnung der Umlenkeinrichtung ergibt sich nach Anspruch 4 dann, wenn die Antriebsscheiben auf der Innenumfangsseite des Antriebsriemens eingreifen, während die Umlenkeinrichtung so positioniert ist, daß sie auf der Außenumfangsseite des Antriebsriemens eingreift und diesen unter Spannung hält.

Es sind verschieden Positionierungsmöglichkeiten gegeben, um die Umlenkeinrichtung anzuordnen. Eine solche Anordnung ist zum einen in dem Bereich des Antriebsriemens zwischen den beiden Antriebsscheiben, die den Antriebswellen für die Arbeitseinheiten zugeordnet, möglich; bevorzugt wird jedoch gemäß Anspruch 5 die Umlenkeinrichtung zwischen der Motor-Antriebsscheibe und der einen Antriebsscheibe, die der Antriebswelle des einen Arbeitswerkzeugs zugeordnet ist, positioniert, da dieser Abschnitt in Drehrichtung der Antriebswelle praktisch zugfrei ist. Hierdurch ist die Lagerung der Umlenkrolle nur geringen Lagerkräften ausgesetzt. Darüber hinaus hat die der Umlenkeinrichtung benachbarte Antriebsscheibe des Arbeitswerkzeugs den größeren Durchmesser (Anspruch 6) der beiden Antriebsscheiben, um so gegenüber der im Durchmesser kleineren Antriebsscheibe größere Drehmomente bei geringeren Drehzahlen übertragen zu können.

Weiterhin sollte der Umschlingungswinkel des Antriebsriemens um die der Umlenkeinrichtung benachbarte, im Durchmesser größere Antriebsscheibe annähernd 270° (Anspruch 7) betragen, um Verschleiß des Antriebsriemens zu vermeiden.

Weiterhin hat sich gezeigt, daß ein sicherer Antrieb insbesondere dann gegeben ist, wenn der Antriebsriemen gemäß Anspruch 8 als Zahnriemen ausgebildet ist, wobei die jeweiligen Antriebsscheiben eine geeignete Verzahnung aufweisen, in die der Zahnriemen eingreift.

Weitere Einzelheiten und Merkmale der Erfindung ergeben sich aus der nachfolgenden Beschreibung eines Ausführungsbeispiels anhand der Zeichnungen. In der Zeichnung zeigt:
- Fig. 1: eine perspektivische Ansicht eines Trägers mit Antriebsmotor und zwei Antriebswellen für jeweils ein Arbeitswerkzeug, von der Oberseite des Trägers aus gesehen, und
- Fig. 2: eine perspektivische Ansicht des Trägers der Fig. 1 aus Blickrichtung von schräg unten.

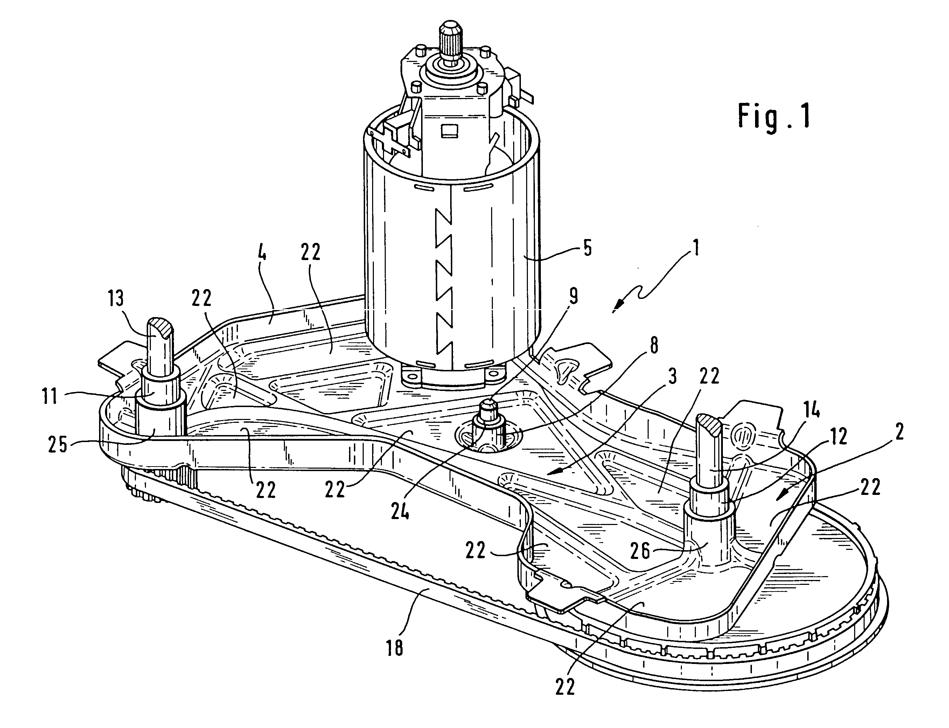

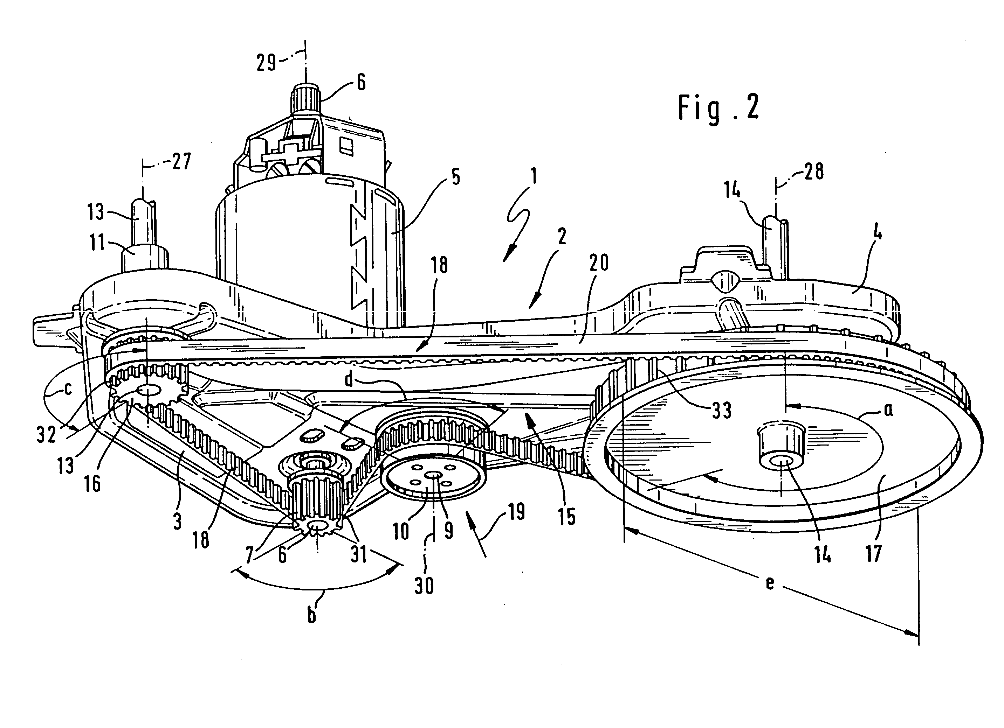

Die Antriebseinheit 1, wie sie in den Figuren 1 und 2 zu sehen ist, dient zum Antrieb einer Küchenmaschine, die zwei Arbeitseinheiten besitzt, die jedoch nicht näher dargestellt sind. Die Antriebseinheit 1 weist einen Träger 2 mit einer aus Blech ausgeformten Grundplatte 3 auf, die mit ihren flachen Flächenelementen 22 in etwa in einer Ebene verläuft. Umlaufend an der Grundplatte 3 ist ein über deren Ebene nach oben vorstehender Rand 4 gebildet, der etwa senkrecht zu der Ebene der Grundplatte 3 verläuft. An einem seitlichen Bereich der Grundplatte 3 ist ein elektrischer Antriebsmotor 5 befestigt, dessen Antriebswelle 6 über die Unterseite 15 der Grundplatte 3 vorsteht, wie in Fig. 2 zu sehen ist. An dieser Antriebswelle 6 ist ein Antriebsritzel 7 drehfest befestigt.

Etwa in der Mitte des Trägers 2 befindet sich eine aus dem Blechträger 2 herausgezogene Aufnahmehülse 8, in der eine Lagerhülse 24 eingepreßt ist, an deren unterem, über die Grundplatte 3 vorstehendem Ende, eine über eine Welle 9 drehbar gelagerte Umlenkrolle 10 befestigt ist. Aufnahmehülse 8, Welle 9 und Umlenkrolle 10 bilden die Umlenkeinrichtung der Antriebseinheit 1. Weiterhin sind an den beiden Enden des langgestreckten Trägers 2 in weiteren hochgezogenen Aufnahmehülsen 25, 26 Lagerhülsen 11, 12 eingepreßt. In den Lagerhülsen 11, 12 sind jeweils eine Antriebswelle 13, 14 drehbar geführt. Auf den Antriebswellen 13, 14 sind von unten her je eine Antriebsscheibe 16, 17 drehfest aufgepreßt, verklebt oder sonst wie drehfest verbunden.

An den oberen, in Fig. 1 zu sehenden Enden dieser Antriebswellen 13, 14 wird jeweils ein nicht näher dargestelltes Arbeitswerkzeug einer Küchenmaschine oder aber eine Antriebsnabe für einen Arbeitsbehälter (nicht dargestellt) befestigt, so wie dies beispielsweise aus der EP-0 239 829 B1 und der DE-42 15 882 C1 bekannt ist.

Die eine Antriebsscheibe 16 weist einen wesentlich kleineren Durchmesser als die andere Antriebsscheibe auf. Durch die unterschiedlichen Durchmesser der beiden Antriebsscheiben 16, 17 werden die jeweiligen Antriebswellen 13, 14 bei sich drehendem Antriebsritzel 7 des Motors 5 mit unterschiedlichen Drehzahlen und unterschiedlichen Drehmomenten über einen einzigen Antriebsriemen 18 angetrieben. Die Achsen 27, 28, 29, 30 der Antriebswellen 13, 14, 6 und der Welle 9 verlaufen parallel zueinander und im wesentlichen senkrecht zur Ebene der Grundplatte 3.

Während nach Fig. 2 das Antriebsritzel 7 sowie die beiden Antriebsscheiben 16, 17 auf der Innenseite des Antriebsriemens 18 eingreifen, greift die Umlenkrolle 10 auf der glatten Außenseite 20 des Antriebsriemens 18 in diesen ein. Die Umlenkrolle 10 ist zwischen dem Antriebsritzel 7 des Antriebsmotors 5 und der Antriebsscheibe 17 mit großem Durchmesser derart benachbart positioniert, daß sie den Antriebsriemen 18 zur Innenseite hin umlenkt. Dies hat zur Folge, daß der Antriebsriemen 18 einen großen Umschlingungswinkel a um die im Durchmesser größere Antriebsscheibe 17 beschreibt, der bei einem Durchmesser e von etwa 114 mm etwa 214° beträgt. Darüber hinaus wird der Antriebsriemen 18 durch den Versatz der Umlenkrolle 10 nach innen um einen Winkelbereich von etwa 158° (Umschlingungswinkel b) bei einem Durchmesser von etwa 15 mm um das Antriebsritzel 7 herum geführt.

Weiterhin ist, wie in der Fig. 2 zu sehen ist, durch die versetzte Anordnung des Antriebsritzels 7 zu der Antriebsscheibe 16 der linken Antriebswelle 13 ein Umschlingungswinkel c um die Antriebswelle 16 erreicht, der ebenfalls etwa 124° bei einem Durchmesser von etwa 25 mm beträgt. Aufgrund dieser relativ großen Umschlingungswinkel a, b, c, die aufgrund der Umlenkrolle 10 erreicht werden können, wird ein sicherer Eingriff zwischen den jeweiligen Antriebsscheiben 16, 17 sowie dem Antriebsritzel 7 mit dem Antriebsriemen 18 erzielt. Der Abstand zwischen den Zähnen 31, 32 des Antriebsritzels 7 und der Antriebsscheibe 16 betragen 3 mm, der Abstand zwischen den Zähnen 33 der Antriebsscheibe 17 beträgt 12 mm bei gleicher Teilung. Das Weglassen von drei Zähnen auf 12 mm Umfang der Antriebsscheibe 17 ist möglich, weil die während des Betriebs der Küchenmaschine an den verbleibenden Zähnen aufzunehmenden Kräfte von diesen immer noch schadlos übernommen werden. Ein weiterer Vorteil der reduzierten Zähnezahl an der Antriebsscheibe 17 besteht darin, daß die Laufgeräusche während des Betriebs der Küchenmaschine verringert werden.

Zusätzlich sind die Motor-Antriebsscheibe bzw. das Antriebsritzel 7 sowie die beiden Antriebsscheiben 16 und 17 verzahnt ausgebildet, in die eine Verzahnung des Antriebsriemens 18, die nicht dargestellt ist, eingreift, während die Umlenkrolle 10 eine Rolle mit glatter Umfangsfläche ist, die in die glatte Außenseite 20 des Antriebsriemens 18 eingreift.

Die Umlenkrolle 10 kann mit einer Spanneinrichtung ausgestattet werden, um den Antriebsriemen in Richtung des Spannpfeils 19 spannen zu können. Unter gelöster Umlenkrolle 10, d.h. dann, wenn die Umlenkrolle 10 entgegen der Richtung des Spannpfeils 19 verschoben wird, kann der Antriebsriemen 18 leicht von den Antriebsscheiben 16 und 17 und dem Antriebsritzel 7 abgenommen werden, da er eine ausreichende Länge besitzt. Um ein solches Spannen der Umlenkrolle 10 zu ermöglichen, kann ein Langloch in der Grundplatte 3 des Trägers 2 vorgesehen werden, entlang der die Umlenkrolle, und zwar in Richtung des Spannpfeils 19, zum Antriebsriemen 18 hin oder weg verschoben und anschließend fixiert werden kann. Letzteres kann durch eine Verschraubung erfolgen.

## Patentansprüche

1. Elektrisch angetriebene Haushaltsküchenmaschine mit einer Antriebseinheit (1), die einen Träger (2) mit einer Grundplatte (3) aufweist, wobei am Träger (2) Lagerhülsen (11, 12) angeordnet sind, in denen jeweils eine Antriebswelle (13, 14) drehbar geführt ist, über die jeweils eine Arbeitseinheit, wie beispielsweise ein Schneidmesser oder ein Rührwerkzeug, antreibbar sind, wobei die beiden Antriebswellen (13, 14) mit Antriebsscheiben (16, 17) drehfest verbunden sind, die unter einem geeigneten Untersetzungs- oder Übersetzungsverhältnis antriebsmäßig in einen Antriebsriemen (18) eingreifen, in den auch ein Antriebsritzel (7) einer Motor-Antriebswelle (6) eines auf der Grundplatte (3) befestigten elektrischen Motors (5) eingreift, wobei zur Vermeidung von Schlupf und zur Übertragung einer erhöhten Kraft zwischen dem Antriebsriemen (18), den Antriebsscheiben (16, 17) und dem Antriebsritzel (7) eine Umlenkeinrichtung (8, 9, 10) vorgesehen ist, wobei hierzu die Umlenkeinrichtung (8, 9, 10) in den Antriebsriemen (18) derart eingreift, daß der Umschlingungsumfang des Antriebsriemens (18) um die der Umlenkeinrichtung (8, 9, 10) benachbarten zwei Antriebsscheiben (16, 17) vergrößert ist und wobei die Umlenkeinrichtung (8, 9, 10) in ihrer Position derart justierbar ist, daß der Umschlingungsumfang des Antriebsriemens (18) um die Antriebsscheiben (16, 17) veränderbar ist.

2. Elektrisch angetriebene Haushaltsküchenmaschine nach Anspruch 1,
**dadurch gekennzeichnet,**
daß die Umlenkeinrichtung (8, 9, 10) als eine mit dem Antriebsriemen (18) mitlaufende Umlenkrolle (10) ausgebildet ist.

3. Elektrisch angetriebene Haushaltsküchenmaschine nach Anspruch 1,
**dadurch gekennzeichnet,**
daß der Antriebsriemen (18) eine Länge derart aufweist, daß er unter gelöster Umlenkeinrichtung (8. 9, 10) von der Motor-Antriebsscheibe (7) und den Antriebswellen (13, 14) für die Arbeitseinheiten abnehmbar ist.

4. Elektrisch angetriebene Haushaltsküchenmaschine nach Anspruch 1,
**dadurch gekennzeichnet,**
daß die Antriebsscheiben (7, 16, 17) auf der Innenumfangsseite des Antriebsriemens (18) eingreifen, während die Umlenkeinrichtung (8, 9, 10) auf der Außenumfangsseite des Antriebsriemens (18) eingreift.

5. Elektrisch angetriebene Haushaltsküchenmaschine nach Anspruch 1,
**dadurch gekennzeichnet,**
daß die Umlenkeinrichtung (8, 9, 10) zwischen der dem elektrischen Motor (5) zugeordneten Motor-Antriebsscheibe (7) und der einen Antriebsscheibe (17) für die Antriebswelle des einen Arbeitswerkzeugs angeordnet ist.

6. Elektrisch angetriebene Haushaltsküchenmaschine nach Anspruch 5,
**dadurch gekennzeichnet,**
daß die der Umlenkeinrichtung (8, 9, 10) benachbarte Antriebsscheibe (17) des Arbeitswerkzeugs einen größeren Durchmesser als die weitere, der anderen Antriebswelle (13) für ein Arbeitswerkzeug zugeordnete Antriebsscheibe (16) aufweist.

7. Elektrisch angetriebene Haushaltsküchenmaschine nach Anspruch 4,
**dadurch gekennzeichnet,**
daß der Antriebsriemen (18) über die der Umlenkeinrichtung (8, 9, 10) benachbarte Antriebsscheibe (17) über annähernd einen Winkelabschnitt von 270° mit dieser in Eingriff stehend herumgeführt ist.

8. Elektrisch angetriebene Haushaltsküchenmaschine nach Anspruch 1,
**dadurch gekennzeichnet,**
daß der Antriebsriemen (18) als Zahnriemen ausgebildet ist und die Antriebsscheiben (7, 16, 17) eine entsprechende Verzahnung aufweisen, in die der Zahnriemen (18) eingreift.

## Claims

1. An electrically powered kitchen appliance for household use, with a drive unit (1) comprising a support (2) with a base plate (3), said support (2) having arranged on it bearing sleeves (11, 12) in each of which a respective drive shaft (13, 14) is rotatably guided for driving a respective work unit as, for example, a cutter blade or a mixing tool, said two drive shafts (13, 14) being non-rotatably connected with drive pulleys (16, 17) drivingly engaging a drive belt (18) at a suitable speedreducing or speed-increasing ratio, said drive belt making further engagement with a drive pinion (7) of a motor drive shaft (6) of an electric motor (5) secured to the base plate (3), wherein, for the prevention of slip and for the transmission of an increased force between the drive belt (18), the drive pulleys (16, 17) and the drive pinion (7), provision is made for a deflecting mechanism (8, 9, 10), wherein for this purpose the deflecting mechanism (8, 9, 10) makes engagement with the drive belt (18) in such manner that the angle of wrap of the drive belt (18) about the two drive pulleys (16, 17) adjacent to the deflecting mechanism (8, 9, 10) is increased, and wherein the position of the deflecting mechanism (8, 9, 10) is adjustable such that the angle of wrap of the drive belt (18) about the drive pulleys (16, 17) can be varied.

2. The electrically powered kitchen appliance for household use as claimed in claim 1,
**characterized in that** the deflecting mechanism (8, 9, 10) is configured as a deflection pulley (10) following the drive belt (18) in its movement.

3. The electrically powered kitchen appliance for household use as claimed in claim 1,
**characterized in that** the length of the drive belt (18) is such as to be removable from the motor drive pulley (7) and the drive shafts (13, 14) for the drive units with the deflecting mechanism (8, 9, 10) released.

4. The electrically powered kitchen appliance for household use as claimed in claim 1,
**characterized in that** the drive pulleys (7, 16, 17) make engagement with the inner circumference of the drive belt (18), while the deflecting mechanism (8, 9, 10) makes engagement with the outer circumference of the drive belt (18).

5. The electrically powered kitchen appliance for household use as claimed in claim 1,
**characterized in that** the deflecting mechanism (8, 9, 10) is arranged between the motor drive pulley (7) associated with the electric motor (5) and the one drive pulley (17) for the drive shaft of the one processing tool.

6. The electrically powered kitchen appliance for household use as claimed in claim 5,
**characterized in that** the drive pulley (17) of the processing tool adjacent to the deflecting mechanism (8, 9, 10) has a diameter greater than that of the further drive pulley (16) associated with the other drive shaft (13) for a processing tool.

7. The electrically powered kitchen appliance for household use as claimed in claim 4,
**characterized in that** the drive belt (18) is guided around and makes engagement with the drive pulley (17) adjacent to the deflecting mechanism (8, 9, 10) over an angle of 270°, approximately.

8. The electrically powered kitchen appliance for household use as claimed in claim 1,
**characterized in that** the drive belt (18) is configured as a toothed belt and the drive pulleys (7, 16, 17) are provided with suitable teeth for engagement with the toothed belt (18).

## Revendications

1. Robot ménager entraîné électriquement comportant une unité d'entraînement (1), qui possède un support (2) pourvu d'une plaque de base (3), dans lequel sur le support (2) sont disposées des douilles de tourillonnage (11, 12), dans lesquelles est guidé respectivement, de manière à pouvoir tourner, un arbre d'entraînement (13, 14), à l'aide duquel une unité respective de travail, comme par exemple un couteau ou un agitateur, peut être entraînée, et dans lequel les deux arbres d'entraînement (13, 14) sont reliés avec blocage en rotation à des poulies d'entraînement (16, 17), qui engrènent selon une liaison d'entraînement, conformément à un rapport de démultiplication ou à un rapport de multiplication approprié, avec une courroie d'entraînement (18), avec laquelle engrène également un pignon d'entraînement (7) d'un arbre d'entraînement (6) d'un moteur électrique (5) fixé sur la plaque de base (3), et dans lequel il est prévu un dispositif de renvoi (8, 9, 10) pour éviter un glissement et pour transmettre une force accrue entre la courroie d'entraînement (18) et les poulies d'entraînement (16, 17) et le pignon d'entraînement (7), et dans lequel à cet effet le dispositif de renvoi (8, 9, 10) engrène avec la courroie d'entraînement (18) de telle sorte que la longueur d'enroulement de la courroie dentée (18) autour des deux poulies d'entraînement (16, 17) voisines du dispositif de renvoi (8, 9, 10) est accrue, et dans lequel la position du dispositif de renvoi (8, 9, 10) peut être ajustée de telle sorte que la longueur d'enroulement de la courroie d'entraînement (18) autour des poulies d'entraînement (16, 17) peut être modifiée.

2. Robot ménager entraîné électriquement selon la revendication 1, **caractérisé en ce**
**que** le dispositif de renvoi (8, 9, 10) est agencé sous la forme d'un rouleau de renvoi (10) tournant conjointement avec la courroie d'entraînement (18).

3. Robot ménager entraîné électriquement selon la revendication 1, **caractérisé en ce**
**que** la courroie d'entraînement (18) possède une longueur telle qu'elle peut être retirée de la poulie d'entraînement (7) du moteur et des arbres d'entraînement (13, 14) prévus pour les unités de travail, lorsque le dispositif de renvoi (8, 9, 10) est détaché.

4. Robot ménager entraîné électriquement selon la revendication 1, **caractérisé en ce**
**que** les poulies d'entraînement (7, 16, 17) engrènent avec la face périphérique intérieure de la courroie d'entraînement (18), tandis que le dispositif de renvoi (8, 9, 10) engrène avec la face périphérique extérieure de la courroie d'entraînement (18).

5. Robot ménager entraîné électriquement selon la revendication 1, **caractérisé en ce**
**que** le dispositif de renvoi (8, 9, 10) est disposé entre la poulie d'entraînement (7) du moteur, associée au moteur électrique (5), et une poulie (17) pour l'arbre d'entraînement d'un outil de travail.

6. Robot ménager entraîné électriquement selon la revendication 5, **caractérisé en ce**
**que** la poulie d'entraînement (17) de l'outil de travail, qui est voisine du dispositif de renvoi (8, 9, 10), possède un diamètre supérieur à celui de l'autre poulie d'entraînement (16) qui est associée à l'autre arbre d'entraînement (13) pour un outil de travail.

7. Robot ménager entraîné électriquement selon la revendication 4, **caractérisé en ce**
**que** la courroie d'entraînement (18) circule sur la poulie d'entraînement (17) voisine du dispositif de renvoi (8, 9, 10) en engrenant avec cette poulie sur une plage angulaire approximative de 270°.

8. Robot ménager entraîné électriquement selon la revendication 1, **caractérisé en ce**
**que** la courroie d'entraînement (18) est agencée sous la forme d'une courroie dentée et que les poulies d'entraînement (7, 16, 17) possèdent une denture correspondante avec laquelle engrène la courroie dentée (18).
